# EUROPEAN PATENT SPECIFICATION

(11) **EP 3 525 904 B1**
(45) Date of publication and mention of the grant of the patent: **06.01.2021**
(21) Application number: 17809416.5
(22) Date of filing: 15.11.2017
(51) Int. Cl.: B01D 29/15, B01D 29/52

(54) **FILTER ASSEMBLY WITH FILTER LOCK DESIGN**
FILTERANORDNUNG MIT FILTERVERRIEGELUNGSDESIGN
ENSEMBLE FILTRE À CONCEPTION DE VERROUILLAGE DE FILTRE

(30) Priority: 17.11.2016 US 201662423526 P
(43) Date of publication of application: 21.08.2019
(73) Proprietor: Lonza Limited, 3930 Visp (CH)
(72) Inventor: BRYCE, Andrew, 3930 Visp (CH)
(74) Representative: Greiner, Elisabeth
(86) International application number: PCT/US2017/061736
(87) International publication number: WO 2018/093854

(56) References cited:
- DE-A1- 1 436 313
- DE-A1-102015 215 168
- DE-C1- 3 335 938
- US-A1- 2002 130 092

## Description

### BACKGROUND

Various different filter assemblies exist for filtering all different types of materials. For example, filter assemblies are used to filter fluids in the pharmaceutical field, in the food service industry, and in the water purity industry. The configuration of the filter assembly can depend upon the fluid being filtered. In general, the filter assembly is designed to receive a fluid and to filter out from the fluid contaminants or waste which may comprise particles or other substances that are dissolved, undissolved or immiscible in the liquid.

In one type of application, the filter assembly includes a plurality of filter cartridges that are attached to a base assembly in a vertical position. A housing or dome is placed over the filter cartridges and a fluid tight seal is formed between the housing or dome and the base assembly. Each filter cartridge can have a tubular shape and can include a filter media encased within the cartridge that is designed to filter out contaminants from the particular fluid being fed through the system.

The filter assembly can further include an inlet and an outlet. A fluid to be filtered is sent through the inlet and into the housing. Once in the housing, the fluid is forced through the filter cartridges. For example, filter assemblies can be designed to operate at various pressures within the housing. The fluid pressure within the housing, for instance, can be greater than 0,345 bar (5 psi), such as greater than 0,69 bar (10 psi), such as greater than 1.38 bar (20 psi). Operating pressures can exceed, in some cases, 69 bar (1000 psi).

Once forced through the filter cartridges, contaminants contained within the fluid are removed by the filter media and the clean fluid is collected in an outlet.

For example, DE 3335938 C1 relates to a multi-part filter housing for the pressure filtration of fluids, having a housing upper part, intermediate base and housing lower part, wherein in the intermediate base, filter holders leading from a turbidity to a sterile space can receive filter cartridges having gaskets for sealing the cartridge to the holder. US 2002/130092 A1 relates to an integrated multi-round filter housing with associated systems such as spray device assemblies, and to methods for cleaning the filter housing using Clean-in-Place technology, wherein the housing has an integrated base including an integral cartridge plate, the upper face of which is recessed to facilitate drainage of product and cleaning media. Further, DE 102015215168 A1 relates to a filter and filter housing with a bottom plate for receiving one or more filters, wherein one of the inflow and discharge is radial and the other is axial with flow through the base plate, and the filter includes fixing means and sealing means for fixing to the housing. In addition, DE 102015215168 A1 relates to the preparation of filter cartridges having a cylindrical filter body consisting of resin-impregnated glass fiber filter media, a plastic end cap attached to said body, a gasket held by said cap and an internal thread arranged in said cap for sealing the cartridge to an external thread protruding over a filter housing.

Over time, the filter cartridges accumulate significant amounts of contaminants and waste. Due to the contaminants and waste, the filter cartridges begin to lose their efficiency. Consequently, the filter cartridges contained within the filter assembly are required to be removed and replaced on a periodic basis.

When the filter cartridges are removed and replaced, it is very important that the new filter cartridges form a fluid tight seal with the base assembly. In order to seal the filter cartridge against the base assembly, in many applications, the filter cartridge includes one or more O-rings positioned at the end of the cartridge that are designed to be seated against a surface of the base assembly. Unfortunately, during replacement of the filter cartridges, problems can occur in correctly installing the cartridges resulting in an improper seal between the cartridge and the base assembly. For example, one problem that has been experienced in the past is that when non-ideal conditions exist, the O-rings have a tendency to become unseated and roll on the cartridge preventing the cartridge from forming a fluid tight seal and/or a sterile seal with the base assembly. Unseated O-rings or gaskets can lead to disastrous consequences. For instance, filter cartridges not properly installed can lead to fluid leaks allowing unfiltered liquid to bypass the cartridges and contaminate the product being produced.

In view of the above, a need exists for an improved filter assembly, and particularly for a system for sealing filter cartridges within a filter assembly.

### SUMMARY

In general, the present disclosure is directed to a filter assembly containing one or more filter cartridges for filtering fluids, such as liquids or gases. More particularly, the present disclosure is directed to a filter cartridge lock and sealing assembly that allows filter cartridges to be easily removed and installed in the system without gasket failure. For example, in one embodiment, the present disclosure is directed to a specially designed recess that includes a plurality of surfaces that work in conjunction to receive an end of a filter cartridge while minimizing gasket errors, such as the occurrence of unseated rolled O-rings.

In one embodiment, for instance, the present disclosure is directed to a drain and locking base for a filter assembly. The base may comprise a base plate that has a perimeter. Located along the perimeter is a securing mechanism for securing the base plate to an open end of a filter housing. In one embodiment, a gasket may also be provided between the filter housing and base plate for producing a fluid tight seal.

The base plate further comprises a plurality of filter receiving recesses that are each configured to receive an end of a filter cartridge. Each recess includes an engaging element for securing a filter cartridge to the base plate. The recess has a depth and includes a first section adjacent to a top end of the recess. The first section has a first diameter and a wall. The wall has a tapering height.

Each recess can further include a gasket guiding section positioned below the first section. The gasket guiding section can comprise a chamfered surface having an angle of from about 30° to about 60° in relation to a vertical line parallel to a central axis of the recess. In other embodiments, the angle of the chamfered surface may be from about 35° to about 55°, such as from about 40° to about 50°. In one embodiment, the chamfered surface is at an angle of about 45 °. The chamfered surface can have a length (measured along the same direction as the vertical line) of from about 0.8 mm (0.03 in) to about 3.2 mm (0.15 in), such as from about 1.1 mm (0.04 in) to about 2.6 mm (0.1 in), such as from about 1.3 mm (0.05 in) to about 1.7 mm (0.07 in).

Each recess of the base plate further includes a gasket contacting section adjacent to the gasket guiding section. The gasket contacting section has a second diameter that is less than the first diameter of the first section. The second diameter has a size that engages a gasket on a filter cartridge to form a fluid tight seal when the filter cartridge is inserted into the recess.

As described above, the top end of the first section has a wall with a tapering height. For example, the difference between a greatest height in the wall and a lowest height in the wall can be from about 0.5 mm (0.01 in) to about 2 mm (0.08 in), such as from about 0.8 mm (0.03 in) to about 1.5mm (0.06 in). The tapering wall is at an angle to a horizontal line that is perpendicular to a central axis of the recess of from about 0.5° to about 1.5°.

In one embodiment, the gasket guiding section is adjacent to the first section at one end and adjacent to the gasket contacting section at an opposite end. At the first end the gasket guiding section can have the same diameter as the first section. At the opposite end, on the other hand, the gasket guiding section can have a diameter that is the same as the diameter of the gasket contacting section.

The base plate can further include at least one outlet. Each of the recesses can be in fluid communication with one or more of the outlets for allowing filtered fluids to flow out of the filter assembly.

The present disclosure is also directed to a filter assembly incorporating the base as described above. The filter assembly can include a housing defining a hollow interior and an open end. At least one filter cartridge, such as a plurality of filter cartridges, can be contained within the hollow interior of the housing. Each filter cartridge can include a first end and a second end. The second end of each filter cartridge can include at least one gasket, such as an O-ring, that encircles the cartridge. The second end of each filter cartridge is designed to be inserted into one of the recesses of the base plate.

In one embodiment, each recess in the base plate can include an engaging element for securing the filter cartridge to the base. For example, each filter cartridge may include a plurality of locking elements that can be secured in a corresponding plurality of engaging elements on the base plate. In one particular embodiment, each filter cartridge is twisted into a corresponding recess causing locking elements on the filter cartridge to be inserted into engaging elements or slots within the recess.

The filter cartridges of the present disclosure can be made from various materials. In one embodiment, each filter cartridge includes a filter housing containing a filter media. The filter media can comprise any suitable material depending upon the particular application. For instance, the filter media may comprise a hydrophilic membrane or a hydrophobic membrane. In one embodiment, the filter media may comprise polyvinylidene fluoride. The filter media may have a pore size of less than about 0.5 microns, such as less than about 0.4 microns, such as less than about 0.3 microns, such as less than about 0.25 microns.

The filter assembly further includes at least one fluid inlet and at least one fluid outlet. Fluids entering the inlet are forced through the filter cartridges and a filtered liquid flows through the fluid outlet and is collected.

Other features and aspects of the present disclosure are discussed in greater detail below.

### BRIEF DESCRIPTION OF THE DRAWINGS

A full and enabling disclosure of the present disclosure is set forth more particularly in the remainder of the specification, including reference to the accompanying figures, in which:
Figure 1 is a side view of one embodiment of a filter assembly made in accordance with the present disclosure;
Figure 2 is a perspective view of one embodiment a base that may be incorporated into the filter assembly shown in Figure 1;
Figure 3 is a perspective view with cut away portions of the base illustrated in Figure 2;
Figure 4 is a is a perspective view of one embodiment of a filter cartridge the may be used in the filter assembly of the present disclosure;
Figure 5 is a is a perspective view of one embodiment of a filter cartridge receiving recess made in accordance with the present disclosure; and
Figure 6 is a cross-sectional view of the cartridge filter receiving recess as shown in Figure 5; and
Figure 7 is a plan view of the cartridge filter receiving recess as shown in Figures 5 and 6.

Repeat use of reference characters in the present specification and drawings is intended to represent the same or analogous features or elements of the present invention.

### DETAILED DESCRIPTION

It is to be understood by one of ordinary skill in the art that the present discussion is a description of exemplary embodiments only, and is not intended as limiting the broader aspects of the present disclosure.

In general, the present disclosure is directed to a filter assembly for filtering fluids, such as liquids and gases. The fluid, for instance, may comprise a solution, a suspension, a dispersion or the like containing contaminants or waste that are to be removed by the filter assembly. The present disclosure is also directed to a base for use in a filter assembly. The base includes at least one filter cartridge receiving recess that is designed to form a fluid tight seal with a filter cartridge. In accordance with the present disclosure, the filter cartridge recess is also designed so that filter cartridges can be removed and replaced quickly and easily while minimizing gasket malfunctions.

During the use of filter assemblies of the type of the present disclosure, the filter cartridges can accumulate significant amounts of contaminants and waste which ultimately can degrade their efficiency and usefulness. Consequently, the filter cartridges must be removed and replaced on a periodic basis. Removal and replacement is preferably done as quickly as possible in order to minimize downtime of the process. Depending upon the fluids being filtered, various different environments can exist within the filter assembly during the replacement of the cartridges. One reoccurring problem that has persisted in filter assemblies is the unseating or other malfunction of the gasket around the filter cartridges during installation, especially during breaks in the filtering process. For instance, many filter cartridges have O-rings that can roll and displace from a groove on the cartridge. When this occurs, the cartridge can malfunction and not form a fluid tight seal within the filter assembly. When this occurs, unfiltered and/or contaminated fluids can combine in the effluent with filtered fluids to produce a contaminated product. Once contamination occurs, the entire product batch needs to be reprocessed and refiltered.

In this regard, the present disclosure is directed to a uniquely designed recess for sealing with filter cartridges. The recess of the present disclosure includes at least three different surfaces that work in conjunction to prevent gasket failure on the filter cartridge during installation. In particular, the recess includes a tapered locking wall in combination with a chamfered surface having a specially designed angle and length that cooperates with the locking wall and a gasket contacting wall to greatly and dramatically reduce gasket malfunction and errors during installation of the cartridges.

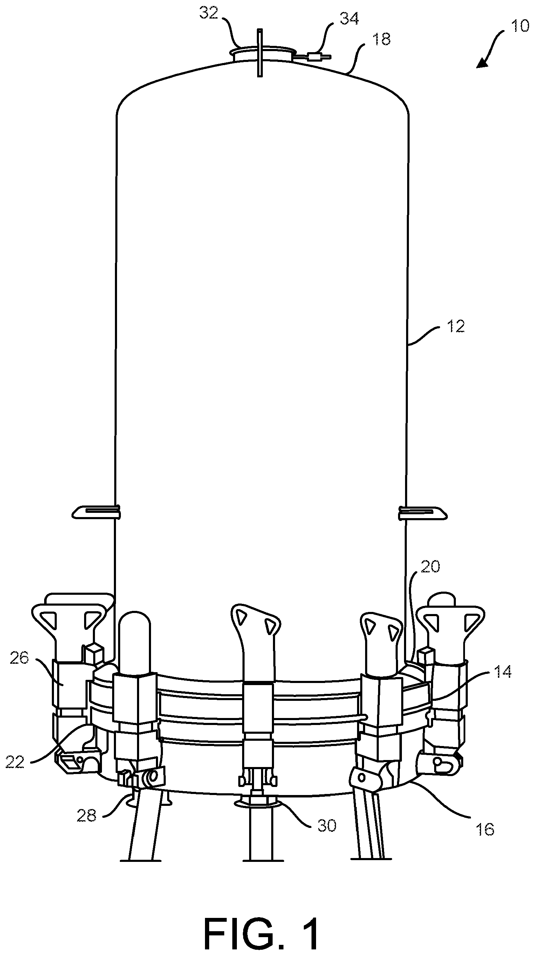

Referring to Figure 1, for instance, one embodiment of a filter assembly 10 made in accordance with the present disclosure is shown. As illustrated, the filter assembly 10 includes a housing 12 attached to a draining and locking base 16. The housing 12 defines a hollow interior that encloses one or more filter cartridges within the filter assembly 10. The housing 12 can be made from a single piece or can be divided into separate pieces that are attached together. The filter housing 12 and the base 16 can be made from various different materials, such as metal. In one embodiment, for instance, both the housing 12 and base 16 are made from stainless steel. Other nonferrous metals that may be used to produce the housing and base include various alloys such as Iconel, Hastelloy and various aluminum alloys. Depending upon the particular application, the housing 12 and the base 16 may also be made from a high density polymer.

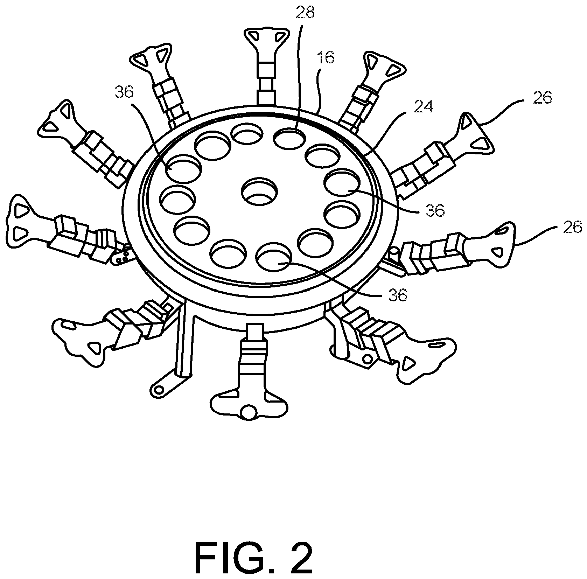

As shown, the housing 12 in the embodiment illustrated in Figure 1 includes a closed dome end 18 and an open end 14. The open end 14 engages with the base 16. For example, the housing 12 can include a flange 20 that mates with a flange 22 on the base 16. As shown in Figure 2, the base 16 can include a gasket or O-ring 24 that provides a fluid tight seal between the housing 12 and the base 16. As shown in Figure 1, various different securing devices 26 can be attached to the base 16 and/or the housing 12 for securing the housing 12 to the base 16. In the embodiment illustrated in Figures 1 and 2, the securing devices 26 comprise a plurality of clamps that can be tightened to the housing 12 by engaging the flange 20. Alternatively, the securing devices can comprise bolts, screws, or the like.

The filter assembly 10 further includes a fluid inlet 28 and a fluid outlet 30. In the embodiment illustrated in Figure 1, the filter assembly 10 only includes a single fluid inlet 28 and a single fluid outlet 30. It should be understood, however, that the filter assembly 10 may include a plurality of fluid inlets and/or a plurality of fluid outlets.

The housing 12 of the filter assembly 10 includes a port 32 and a valve 34 located on the closed end of the housing. The port 32 allows for access to the interior of the housing 12 and can serve as a gauge port during the filtration process. The port 32 is also designed to receive a cleaning device, such as a spray device. After a filtration process, for instance, a spray device may be inserted into the port 32 for spraying the interior of the housing including the filter cartridges. In this manner, the filter assembly can be cleaned without having to be dismantled.

The valve 34, on the other hand, is for permitting gases, such as air, to escape from the filter housing 12 during operation.

For example, during normal operation, unfiltered product, such as a fluid, is pumped into the filter assembly 10 through the fluid inlet 28. As the fluid is being filled into the housing 12, the valve 34 is open to permit trapped air to escape. After the filter assembly 10 is filled with the fluid, the valve 34 is closed. Pressure is applied to the fluid as it enters the filter assembly through the inlet 28. The pressure can be from 0,345 bar (5 psi) to 69 bar (1000 psi). For instance, the pressure can be greater than 0,69 bar (10 psi), such as greater than 1,38 bar (20 psi), such as greater than 2,07 bar (30 psi), such as greater than 3,45 bar (50 psi). The pressure is generally less than 34,5 bar (500 psi), such as less than 13,8 bar (200 psi). As will be explained in greater detail below, the filter pressure forces the unfiltered product into the one or more filter cartridges contained within the filter assembly 10. The filter cartridges filter the fluid and remove waste, contaminants, or any other undesired components within the fluid. The filtrate or filtered product then travels down through the interior portion of the filter cartridges and out through the fluid outlet 30. The filtrate or filtered product is then collected from the fluid outlet 30.

Referring to Figure 2, the base 16 of the filter assembly 10 is shown in greater detail. As illustrated, the base 16 includes a bore for the fluid inlet 28 and a bore for the fluid outlet 30. In addition, the base 16 includes one or more filter cartridge receiving recesses 36. In the embodiment illustrated in Figure 2, the base 16 includes eleven filter cartridge receiving recesses 36. It should be understood, however, that in certain embodiments, the base may only include a single filter cartridge receiving recess 36. In other embodiments, however, the base 16 may include a plurality of filter cartridge receiving recesses that may number more than eleven or less than eleven. For instance, the base 16 may include greater than five filter cartridge receiving recesses 36, such as greater than ten filter cartridge receiving recesses 36. The number of filter cartridge receiving recesses on the base 16 is generally less than about 100, such as less than about 50, such as less than about 25.

In accordance with the present disclosure, the filter cartridge receiving recesses 36 are specifically designed to quickly and easily seal with a filter cartridge while minimizing or preventing gasket failure, such as O-ring rolling, which refers to an O-ring rolling out of its groove rendering it impossible for the cartridge to form a fluid tight seal with the base 16.

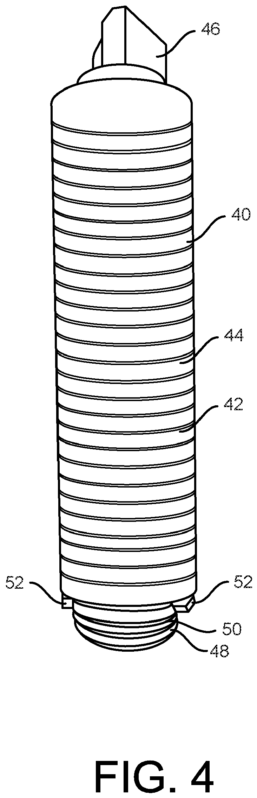

An example of a filter cartridge that may be used with the filter assembly 10 is shown in Figure 4. The filter cartridge 40 includes a filter housing 42 that contains a filter media 44. The filter media 44 can vary depending upon the particular application and the desired result. For example, the filter cartridge 40 can be designed to filter all different types of materials. Fluids that may be filtered according to the present disclosure include pharmaceutical products, water during a purification process, food and beverage products, chemical products, and the like. The filter cartridge 40 may be designed to filter out particles and other particulates, immiscible fluids, charged particles, and the like.

Examples of filter media that may be used include any suitable filter membrane that can be made from any suitable polymer. The filter media, for instance, may comprise a hydrophilic membrane or may comprise a hydrophobic membrane. The filter media may have a pore size of less than about 0.5 microns, such as less than about 0.3 microns, such as less than about 0.25 microns. In one embodiment, the filter media comprises polyvinylidene fluoride.

As shown in Figure 4, the filter cartridge 40 includes a first or top end 46. The top end typically comprises a closed end. In the embodiment illustrated, for instance, a plug has been inserted into the top end 46.

The filter cartridge 40 further includes a bottom end 48. Bottom end 48 is for attaching to and sealing against the base 16. As shown, the bottom end 48 includes at least one gasket 50. In the embodiment illustrated, for instance, the filter cartridge 40 includes two gaskets 50 or O-rings. The O-rings encircle the filter cartridge and are positioned in recesses formed into the cartridge.

The filter cartridge 40 further includes locking elements 52. In the embodiment illustrated, for instance, the filter cartridge 30 includes a pair of opposing locking elements 52. The locking elements 52 are for securing the filter cartridge 40 to the base 16.

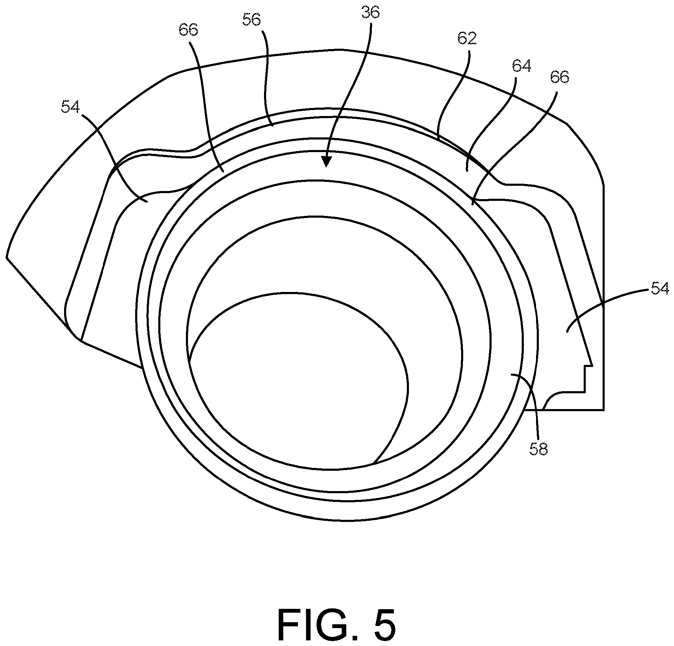

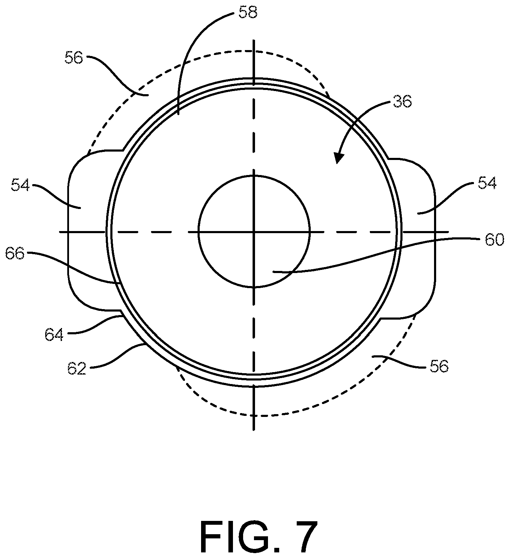

Referring to Figures 5, 6 and 7, the construction of the filter cartridge receiving recesses 36 will now be described in greater detail. As shown in Figure 7, each recess includes engaging elements 54 corresponding to the locking elements 52 on the filter cartridge 40. In order to install the filter cartridge 40 into the recess 36, the locking elements 52 are coordinated with the engaging elements 54. The filter cartridge 40 is then twisted causing the locking elements 52 to become seated within corresponding slots 56. The gaskets 50 on the filter cartridge 40 contact a gasket contacting section 58 of the recess 36. The gaskets form a tension fit with the gasket contacting section 58. In particular, the gasket contacting section 58 has a diameter slightly less than the outer diameter of the gasket 50 once installed on the filter cartridge 40. Contact between the gasket 50 and gasket contacting section 58 provides a fluid tight seal between the base 16 and the filter cartridge 40.

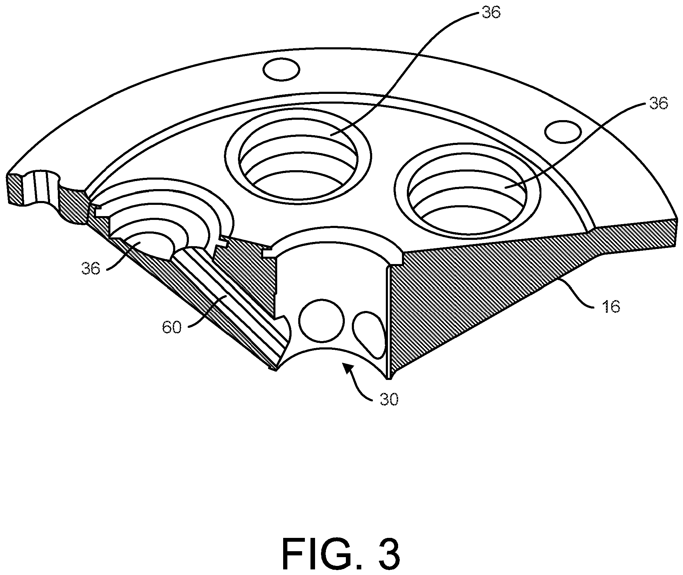

As unfiltered product enters the fluid cartridge 40, the fluid is filtered and the filtrate enters into a passageway within the filter cartridge 40. The filtrate is forced down through the cartridge and enters a channel 60 as shown in Figure 3. The channel 60 is in fluid communication with the fluid outlet 30. The Filtrate or filter product flows through the channel 60 and out the fluid outlet 30 for collection.

As described above, during the insertion of the filter cartridge into the recess, the gaskets have a tendency to become unseated on the cartridge and malfunction. Such malfunctions are more likely to occur when various different fluids are being processed within the system. The presence of various fluids, for instance, can make it more likely for the gaskets or O-rings to roll on the filter cartridge and prevents the formation of a fluid tight seal with the base 16. In this regard, the filter cartridge receiving recesses 36 of the present disclosure include different sections on the recess that transition from the top of the recess to the gasket contacting section 58 for preventing gasket malfunctions.

For instance, as shown in Figures 5, 6 and 7, (not to scale), each filter cartridge receiving recess 36 includes a first section 62, adjacent a top end of the recess. The first section 62 has a first diameter that is larger than the diameter of the second end of the filter cartridge 40. In the embodiment illustrated in Figures 5, 6 and 7, the first section 62 includes at least one engaging element 54 for engaging an end of the filter cartridge. It should be understood, however, that the first section of the recess can be above or below the engaging elements 54.

The first section 62 of the recess 36 includes a wall 64 that defines the diameter of the first section. In accordance with the present disclosure, the wall 64 includes a tapering height. More particularly, the height of the wall 64 changes from a greatest or maximum height to a lowest or minimum height in a gradual manner. Tapering the wall 64 has been found to assist in preventing the gaskets on the filter cartridge from becoming unseated when the filter cartridge is twisted within the recess 36.

In one particular embodiment, the difference between a greatest height of the tapered wall 64 and the lowest height of the wall is generally greater than about 0.5 mm (0.01 in), such as greater than about 0.8 mm (0.03 in), such as greater than about 1 mm (0.04 in), such as greater than about 1.2 mm (0.05 in). The difference in the wall height over the taper is generally less than about 3 mm (0.15 in), such as less than about 2 mm (0.08 in), such as less than about 1.5 mm (0.06 in), such as less than about 1.2 mm (0.045 in), such as less than about 1.1 mm (0.04 in).

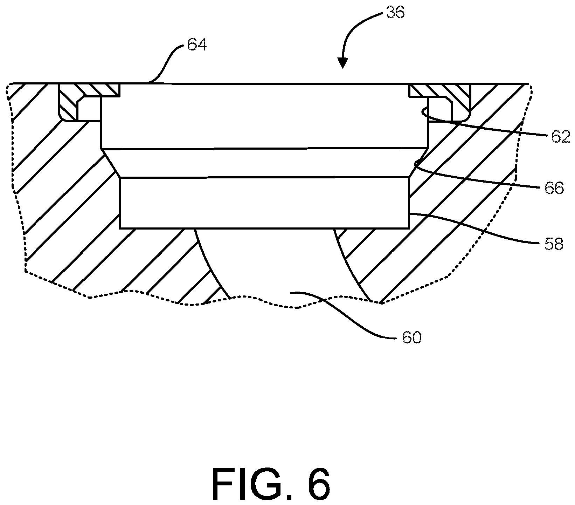

As shown in Figures 5 and 6, the first section 62 of the recess 36 is adjacent to a gasket guiding section 66. The gasket guiding section 66 is positioned in between the first section 62 and the gasket contacting section 58 of the recess 36. In one embodiment, for instance, the gasket guiding section 66 is positioned directly adjacent to the first section 62 on one end and directly adjacent to the gasket contacting section 58 at an opposite end. The gasket guiding section 66 is designed to guide the gaskets on the filter cartridge 40 into the gasket contacting section 58 in a manner that produces a minimal amount of stress and disturbance for allowing the gaskets to contact the wall of the gasket contacting section without becoming unseated or otherwise malfunctioning.

The gasket guiding section 66 generally comprises a chamfered surface that forms an angle with a vertical line that is parallel of the central axis of the recess. In the past, chamfered surfaces were also present in recesses on base plate assemblies. For instance, one past design included a chamfered surface having a length of 0.06 inches and having an angle of 20° with a vertical line. The present inventors, however, discovered that this design does not optimize the prevention of gasket malfunction. In accordance with the present disclosure, the gasket guiding section 66 is at an angle of greater than 20°. For instance, the gasket guiding section can have an angle of greater than about 25°, such as greater than about 30°, such as greater than about 35°, such as greater than about 40°. The gasket guiding section generally has an angle of less than about 60°, such as less than about 55°, such as less than about 50°. In one embodiment, for instance, the gasket guiding section comprises a chamfered surface having an angle of from about 43° to about 47°. The present inventors discovered that this angle in combination with a tapered first section unexpectedly and dramatically prevents O-ring rolling and other gasket malfunctions.

As shown in Figures 5 and 6, the gasket guiding section 66 serves to reduce the diameter of the recess 36 in a gradual manner. The gasket guiding section generally has the same diameter as the first section of the recess at a first end adjacent to the first section. At an opposite end, on the other hand, the gasket guiding section 66 has a diameter that generally matches the diameter of the gasket contacting section 58. The length of the gasket guiding section from the first end to the second end is generally greater than about 0.8 mm (0.03 in), such as greater than about 1.1 mm (0.04 in), such as greater than 1.3 mm (0.05 in), such as greater than about 1.4 mm (0.055 in). The length of the gasket guiding section is generally less than about 3.2 mm (0.15 in), such as less than about 2.6 mm (0.1 in), such as less than about 1.7 mm (0.07 in), such as less than about 1.6 mm (0.06 in).

Filter assemblies made in accordance with the present disclosure can be used in numerous and diverse applications. In one embodiment, for instance, the filter assembly can be used to filter fluids, such as liquids, during the culturing of cells, including prokaryotic and/or eukaryotic cell lines. Further, in embodiments, the devices, facilities and methods are suitable for filtering fluids during the culturing of suspension cells or anchorage-dependent (adherent) cells and are suitable for production operations configured for production of pharmaceutical and biopharmaceutical products-such as polypeptide products, nucleic acid products (for example DNA or RNA), or cells and/or viruses such as those used in cellular and/or viral therapies.

In embodiments, the cells express or produce a product, such as a recombinant therapeutic or diagnostic product. As described in more detail below, examples of products produced by cells include, but are not limited to, antibody molecules (e.g., monoclonal antibodies, bispecific antibodies), antibody mimetics (polypeptide molecules that bind specifically to antigens but that are not structurally related to antibodies such as e.g. DARPins, affibodies, adnectins, or IgNARs), fusion proteins (e.g., Fc fusion proteins, chimeric cytokines), other recombinant proteins (e.g., glycosylated proteins, enzymes, hormones), viral therapeutics (e.g., anti-cancer oncolytic viruses, viral vectors for gene therapy and viral immunotherapy), cell therapeutics (e.g., pluripotent stem cells, mesenchymal stem cells and adult stem cells), vaccines or lipid-encapsulated particles (e.g., exosomes, virus-like particles), RNA (such as e.g. siRNA) or DNA (such as e.g. plasmid DNA), antibiotics or amino acids. In embodiments, the devices, facilities and methods can be used for producing biosimilars.

As mentioned, in embodiments, devices, facilities and methods allow for the production of eukaryotic cells, e.g., mammalian cells or lower eukaryotic cells such as for example yeast cells or filamentous fungi cells, or prokaryotic cells such as Gram-positive or Gram-negative cells and/or products of the eukaryotic or prokaryotic cells, e.g., proteins, peptides, antibiotics, amino acids, nucleic acids (such as DNA or RNA), synthesised by the eukaryotic cells in a large-scale manner. Unless stated otherwise herein, the devices, facilities, and methods can include any desired volume or production capacity including but not limited to bench-scale, pilot-scale, and full production scale capacities.

Moreover and unless stated otherwise herein, the devices, facilities, and methods can include any suitable reactor(s) including but not limited to stirred tank, airlift, fiber, microfiber, hollow fiber, ceramic matrix, fluidized bed, fixed bed, and/or spouted bed bioreactors. As used herein, "reactor" can include a fermentor or fermentation unit, or any other reaction vessel and the term "reactor" is used interchangeably with "fermentor." For example, in some aspects, an example bioreactor unit can perform one or more, or all, of the following: feeding of nutrients and/or carbon sources, injection of suitable gas (e.g., oxygen), inlet and outlet flow of fermentation or cell culture medium, separation of gas and liquid phases, maintenance of temperature, maintenance of oxygen and CO2 levels, maintenance of pH level, agitation (e.g., stirring), and/or cleaning/sterilizing. Example reactor units, such as a fermentation unit, may contain multiple reactors within the unit, for example the unit can have 1, 2, 3, 4, 5, 10, 15, 20, 25, 30, 35, 40, 45, 50, 60, 70, 80, 90, or 100, or more bioreactors in each unit and/or a facility may contain multiple units having a single or multiple reacotrs within the facility. In various embodiments, the bioreactor can be suitable for batch, semi fed-batch, fed-batch, perfusion, and/or a continuous fermentation processes. Any suitable reactor diameter can be used. In embodiments, the bioreactor can have a volume between about 100 mL and about 50,000 L. Non-limiting examples include a volume of 100 mL, 250 mL, 500 mL, 750 mL, 1 liter, 2 liters, 3 liters, 4 liters, 5 liters, 6 liters, 7 liters, 8 liters, 9 liters, 10 liters, 15 liters, 20 liters, 25 liters, 30 liters, 40 liters, 50 liters, 60 liters, 70 liters, 80 liters, 90 liters, 100 liters, 150 liters, 200 liters, 250 liters, 300 liters, 350 liters, 400 liters, 450 liters, 500 liters, 550 liters, 600 liters, 650 liters, 700 liters, 750 liters, 800 liters, 850 liters, 900 liters, 950 liters, 1000 liters, 1500 liters, 2000 liters, 2500 liters, 3000 liters, 3500 liters, 4000 liters, 4500 liters, 5000 liters, 6000 liters, 7000 liters, 8000 liters, 9000 liters, 10,000 liters, 15,000 liters, 20,000 liters, and/or 50,000 liters. Additionally, suitable reactors can be multi-use, single-use, disposable, or non-disposable and can be formed of any suitable material including metal alloys such as stainless steel (e.g., 316L or any other suitable stainless steel) and Inconel, plastics, and/or glass.

In embodiments and unless stated otherwise herein, the devices, facilities, and methods described herein can also include any suitable unit operation and/or equipment not otherwise mentioned, such as operations and/or equipment for separation, purification, and isolation of such products. Any suitable facility and environment can be used, such as traditional stick-built facilities, modular, mobile and temporary facilities, or any other suitable construction, facility, and/or layout. For example, in some embodiments modular clean-rooms can be used. Additionally and unless otherwise stated, the devices, systems, and methods described herein can be housed and/or performed in a single location or facility or alternatively be housed and/or performed at separate or multiple locations and/or facilities.

By way of non-limiting examples and without limitation, U.S. Publication Nos. 2013/0280797; 2012/0077429; 2011/0280797; 2009/0305626; and U.S. Patent Nos. 8,298,054; 7,629,167; and 5,656,491 describe example facilities, equipment, and/or systems that may be suitable.

In embodiments, the cells are eukaryotic cells, e.g., mammalian cells. The mammalian cells can be for example human or rodent or bovine cell lines or cell strains. Examples of such cells, cell lines or cell strains are e.g. mouse myeloma (NSO)-cell lines, Chinese hamster ovary (CHO)-cell lines, HT1080, H9, HepG2, MCF7, MDBK Jurkat, NIH3T3, PC12, BHK (baby hamster kidney cell), VERO, SP2/0, YB2/0, Y0, C127, L cell, COS, e.g., COS1 and COS7, QC1-3,HEK-293, VERO, PER.C6, HeLA, EBI, EB2, EB3, oncolytic or hybridoma-cell lines. Preferably the mammalian cells are CHO-cell lines. In one embodiment, the cell is a CHO cell. In one embodiment, the cell is a CHO-K1 cell, a CHO-K1 SV cell, a DG44 CHO cell, a DUXB11 CHO cell, a CHOS, a CHO GS knock-out cell, a CHO FUT8 GS knock-out cell, a CHOZN, or a CHO-derived cell. The CHO GS knock-out cell (e.g., GSKO cell) is, for example, a CHO-K1 SV GS knockout cell. The CHO FUT8 knockout cell is, for example, the Potelligent® CHOK1 SV (Lonza Biologics, Inc.). Eukaryotic cells can also be avian cells, cell lines or cell strains, such as for example, EBx® cells, EB14, EB24, EB26, EB66, or EBvl3.

In one embodiment, the eukaryotic cells are stem cells. The stem cells can be, for example, pluripotent stem cells, including embryonic stem cells (ESCs), adult stem cells, induced pluripotent stem cells (iPSCs), tissue specific stem cells (e.g., hematopoietic stem cells) and mesenchymal stem cells (MSCs).

In one embodiment, the cell is a differentiated form of any of the cells described herein. In one embodiment, the cell is a cell derived from any primary cell in culture.

In embodiments, the cell is a hepatocyte such as a human hepatocyte, animal hepatocyte, or a non-parenchymal cell. For example, the cell can be a plateable metabolism qualified human hepatocyte, a plateable induction qualified human hepatocyte, plateable Qualyst Transporter Certified™ human hepatocyte, suspension qualified human hepatocyte (including 10-donor and 20-donor pooled hepatocytes), human hepatic kupffer cells, human hepatic stellate cells, dog hepatocytes (including single and pooled Beagle hepatocytes), mouse hepatocytes (including CD-1 and C57BI/6 hepatocytes), rat hepatocytes (including Sprague-Dawley, Wistar Han, and Wistar hepatocytes), monkey hepatocytes (including Cynomolgus or Rhesus monkey hepatocytes), cat hepatocytes (including Domestic Shorthair hepatocytes), and rabbit hepatocytes (including New Zealand White hepatocytes). Example hepatocytes are commercially available from Triangle Research Labs, LLC, 6 Davis Drive Research Triangle Park, North Carolina, USA 27709.

In one embodiment, the eukaryotic cell is a lower eukaryotic cell such as e.g. a yeast cell (e.g., Pichia genus (e.g. Pichia pastoris, Pichia methanolica, Pichia kluyveri, and Pichia angusta), Komagataella genus (e.g. Komagataella pastoris, Komagataella pseudopastoris or Komagataella phaffii), Saccharomyces genus (e.g. Saccharomyces cerevisae, cerevisiae, Saccharomyces kluyveri, Saccharomyces uvarum), Kluyveromyces genus (e.g. Kluyveromyces lactis, Kluyveromyces marxianus), the Candida genus (e.g. Candida utilis, Candida cacaoi, Candida boidinii,), the Geotrichum genus (e.g. Geotrichum fermentans), Hansenula polymorpha, Yarrowia lipolytica, or Schizosaccharomyces pombe, . Preferred is the species Pichia pastoris. Examples for Pichia pastoris strains are X33, GS115, KM71, KM71H; and CBS7435.

In one embodiment, the eukaryotic cell is a fungal cell (e.g. Aspergillus (such as A. niger, A. fumigatus, A. orzyae, A. nidula), Acremonium (such as A. thermophilum), Chaetomium (such as C. thermophilum), Chrysosporium (such as C. thermophile), Cordyceps (such as C. militaris), Corynascus, Ctenomyces, Fusarium (such as F. oxysporum), Glomerella (such as G. graminicola), Hypocrea (such as H. jecorina), Magnaporthe (such as M. orzyae), Myceliophthora (such as M. thermophile), Nectria (such as N. heamatococca), Neurospora (such as N. crassa), Penicillium, Sporotrichum (such as S. thermophile), Thielavia (such as T. terrestris, T. heterothallica), Trichoderma (such as T. reesei), or Verticillium (such as V. dahlia)).

In one embodiment, the eukaryotic cell is an insect cell (e.g., Sf9, Mimic™ Sf9, Sf21, High Five™ (BT1-TN-5B1-4), or BT1-Ea88 cells), an algae cell (e.g., of the genus Amphora, Bacillariophyceae, Dunaliella, Chlorella, Chlamydomonas, Cyanophyta (cyanobacteria), Nannochloropsis, Spirulina,or Ochromonas), or a plant cell (e.g., cells from monocotyledonous plants (e.g., maize, rice, wheat, or Setaria), or from a dicotyledonous plants (e.g., cassava, potato, soybean, tomato, tobacco, alfalfa, *Physcomitrella patens* or Arabidopsis).

In one embodiment, the cell is a bacterial or prokaryotic cell.

In embodiments, the prokaryotic cell is a Gram-positive cells such as Bacillus, Streptomyces Streptococcus, Staphylococcus or Lactobacillus. Bacillus that can be used is, e.g. the *B.subtilis, B.amyloliquefaciens, B.licheniformis, B.natto, or B.megaterium.* In embodiments, the cell is *B.subtilis, such* as *B.subtilis 3NA and B.subtilis* 168. Bacillus is obtainable from, e.g., the Bacillus Genetic Stock Center, Biological Sciences 556, 484 West 12^{th} Avenue, Columbus OH 43210-1214.

In one embodiment, the prokaryotic cell is a Gram-negative cell, such as Salmonella spp. or Escherichia *coli,* such as e.g., TG1, TG2, W3110, DH1, DHB4, DH5a, HMS 174, HMS174 (DE3), NM533, C600, HB101, JM109, MC4100, XL1-Blue and Origami, as well as those derived from E.coli B-strains, such as for example BL-21 or BL21 (DE3), all of which are commercially available.

Suitable host cells are commercially available, for example, from culture collections such as the DSMZ (Deutsche Sammlung von Mikroorganismen and Zellkulturen GmbH, Braunschweig, Germany) or the American Type Culture Collection (ATCC).

In embodiments, the cultured cells are used to produce proteins e.g., antibodies, e.g., monoclonal antibodies, and/or recombinant proteins, for therapeutic use. In embodiments, the cultured cells produce peptides, amino acids, fatty acids or other useful biochemical intermediates or metabolites. For example, in embodiments, molecules having a molecular weight of about 4000 daltons to greater than about 140,000 daltons can be produced. In embodiments, these molecules can have a range of complexity and can include posttranslational modifications including glycosylation.

In embodiments, the protein is, e.g., BOTOX, Myobloc, Neurobloc, Dysport (or other serotypes of botulinum neurotoxins), alglucosidase alpha, daptomycin, YH-16, choriogonadotropin alpha, filgrastim, cetrorelix, interleukin-2, aldesleukin, teceleulin, denileukin diftitox, interferon alpha-n3 (injection), interferon alpha-nl, DL-8234, interferon, Suntory (gamma-1a), interferon gamma, thymosin alpha 1, tasonermin, DigiFab, ViperaTAb, EchiTAb, CroFab, nesiritide, abatacept, alefacept, Rebif, eptoterminalfa, teriparatide (osteoporosis), calcitonin injectable (bone disease), calcitonin (nasal, osteoporosis), etanercept, hemoglobin glutamer 250 (bovine), drotrecogin alpha, collagenase, carperitide, recombinant human epidermal growth factor (topical gel, wound healing), DWP401, darbepoetin alpha, epoetin omega, epoetin beta, epoetin alpha, desirudin, lepirudin, bivalirudin, nonacog alpha, Mononine, eptacog alpha (activated), recombinant Factor VIII+VWF, Recombinate, recombinant Factor VIII, Factor VIII (recombinant), Alphnmate, octocog alpha, Factor VIII, palifermin,lndikinase, tenecteplase, alteplase, pamiteplase, reteplase, nateplase, monteplase, follitropin alpha, rFSH, hpFSH, micafungin, pegfilgrastim, lenograstim, nartograstim, sermorelin, glucagon, exenatide, pramlintide, iniglucerase, galsulfase, Leucotropin, molgramostirn, triptorelin acetate, histrelin (subcutaneous implant, Hydron), deslorelin, histrelin, nafarelin, leuprolide sustained release depot (ATRIGEL), leuprolide implant (DUROS), goserelin, Eutropin, KP-102 program, somatropin, mecasermin (growth failure), enlfavirtide, Org-33408, insulin glargine, insulin glulisine, insulin (inhaled), insulin lispro, insulin deternir, insulin (buccal, RapidMist), mecasermin rinfabate, anakinra, celmoleukin, 99 mTc-apcitide injection, myelopid, Betaseron, glatiramer acetate, Gepon, sargramostim, oprelvekin, human leukocyte-derived alpha interferons, Bilive, insulin (recombinant), recombinant human insulin, insulin aspart, mecasenin, Roferon-A, interferon-alpha 2, Alfaferone, interferon alfacon-1, interferon alpha, Avonex' recombinant human luteinizing hormone, dornase alpha, trafermin, ziconotide, taltirelin, diboterminalfa, atosiban, becaplermin, eptifibatide, Zemaira, CTC-111, Shanvac-B, HPV vaccine (quadrivalent), octreotide, lanreotide, ancestirn, agalsidase beta, agalsidase alpha, laronidase, prezatide copper acetate (topical gel), rasburicase, ranibizumab, Actimmune, PEG-Intron, Tricomin, recombinant house dust mite allergy desensitization injection, recombinant human parathyroid hormone (PTH) 1-84 (sc, osteoporosis), epoetin delta, transgenic antithrombin III, Granditropin, Vitrase, recombinant insulin, interferon-alpha (oral lozenge), GEM-21S, vapreotide, idursulfase, omnapatrilat, recombinant serum albumin, certolizumab pegol, glucarpidase, human recombinant C1 esterase inhibitor (angioedema), lanoteplase, recombinant human growth hormone, enfuvirtide (needle-free injection, Biojector 2000), VGV-1, interferon (alpha), lucinactant, aviptadil (inhaled, pulmonary disease), icatibant, ecallantide, omiganan, Aurograb, pexigananacetate, ADI-PEG-20, LDI-200, degarelix, cintredelinbesudotox, Favld, MDX-1379, ISAtx-247, liraglutide, teriparatide (osteoporosis), tifacogin, AA4500, T4N5 liposome lotion, catumaxomab, DWP413, ART-123, Chrysalin, desmoteplase, amediplase, corifollitropinalpha, TH-9507, teduglutide, Diamyd, DWP-412, growth hormone (sustained release injection), recombinant G-CSF, insulin (inhaled, AIR), insulin (inhaled, Technosphere), insulin (inhaled, AERx), RGN-303, DiaPep277, interferon beta (hepatitis C viral infection (HCV)), interferon alpha-n3 (oral), belatacept, transdermal insulin patches, AMG-531, MBP-8298, Xerecept, opebacan, AIDSVAX, GV-1001, LymphoScan, ranpirnase, Lipoxysan, lusupultide, MP52 (beta-tricalciumphosphate carrier, bone regeneration), melanoma vaccine, sipuleucel-T, CTP-37, Insegia, vitespen, human thrombin (frozen, surgical bleeding), thrombin, TransMID, alfimeprase, Puricase, terlipressin (intravenous, hepatorenal syndrome), EUR-1008M, recombinant FGF-I (injectable, vascular disease), BDM-E, rotigaptide, ETC-216, P-113, MBI-594AN, duramycin (inhaled, cystic fibrosis), SCV-07, OPI-45, Endostatin, Angiostatin, ABT-510, Bowman Birk Inhibitor Concentrate, XMP-629, 99 mTc-Hynic-Annexin V, kahalalide F, CTCE-9908, teverelix (extended release), ozarelix, rornidepsin, BAY-504798, interleukin4, PRX-321, Pepscan, iboctadekin, rhlactoferrin, TRU-015, IL-21, ATN-161, cilengitide, Albuferon, Biphasix, IRX-2, omega interferon, PCK-3145, CAP-232, pasireotide, huN901-DMI, ovarian cancer immunotherapeutic vaccine, SB-249553, Oncovax-CL, OncoVax-P, BLP-25, CerVax-16, multi-epitope peptide melanoma vaccine (MART-1, gp100, tyrosinase), nemifitide, rAAT (inhaled), rAAT (dermatological), CGRP (inhaled, asthma), pegsunercept, thymosinbeta4, plitidepsin, GTP-200, ramoplanin, GRASPA, OBI-1, AC-100, salmon calcitonin (oral, eligen), calcitonin (oral, osteoporosis), examorelin, capromorelin, Cardeva, velafermin, 1311-TM-601, KK-220, T-10, ularitide, depelestat, hematide, Chrysalin (topical), rNAPc2, recombinant Factor V111 (PEGylated liposomal), bFGF, PEGylated recombinant staphylokinase variant, V-10153, SonoLysis Prolyse, NeuroVax, CZEN-002, islet cell neogenesis therapy, rGLP-1, BIM-51077, LY-548806, exenatide (controlled release, Medisorb), AVE-0010, GA-GCB, avorelin, ACM-9604, linaclotid eacetate, CETi-1, Hemospan, VAL (injectable), fast-acting insulin (injectable, Viadel), intranasal insulin, insulin (inhaled), insulin (oral, eligen), recombinant methionyl human leptin, pitrakinra subcutaneous injection, eczema), pitrakinra (inhaled dry powder, asthma), Multikine, RG-1068, MM-093, NBI-6024, AT-001, PI-0824, Org-39141, Cpn10 (autoimmune diseases/inflammation), talactoferrin (topical), rEV-131 (ophthalmic), rEV-131 (respiratory disease), oral recombinant human insulin (diabetes), RPI-78M, oprelvekin (oral), CYT-99007 CTLA4-Ig, DTY-001, valategrast, interferon alpha-n3 (topical), IRX-3, RDP-58, Tauferon, bile salt stimulated lipase, Merispase, alaline phosphatase, EP-2104R, Melanotan-II, bremelanotide, ATL-104, recombinant human microplasmin, AX-200, SEMAX, ACV-1, Xen-2174, CJC-1008, dynorphin A, SI-6603, LAB GHRH, AER-002, BGC-728, malaria vaccine (virosomes, PeviPRO), ALTU-135, parvovirus B19 vaccine, influenza vaccine (recombinant neuraminidase), malaria/HBV vaccine, anthrax vaccine, Vacc-5q, Vacc-4x, HIV vaccine (oral), HPV vaccine, Tat Toxoid, YSPSL, CHS-13340, PTH(1-34) liposomal cream (Novasome), Ostabolin-C, PTH analog (topical, psoriasis), MBRI-93.02, MTB72F vaccine (tuberculosis), MVA-Ag85A vaccine (tuberculosis), FARA04, BA-210, recombinant plague FIV vaccine, AG-702, OxSODrol, rBetV1, Der-p1/Der-p2/Der-p7 allergen-targeting vaccine (dust mite allergy), PR1 peptide antigen (leukemia), mutant ras vaccine, HPV-16 E7 lipopeptide vaccine, labyrinthin vaccine (adenocarcinoma), CML vaccine, WT1-peptide vaccine (cancer), IDD-5, CDX-110, Pentrys, Norelin, CytoFab, P-9808, VT-111, icrocaptide, telbermin (dermatological, diabetic foot ulcer), rupintrivir, reticulose, rGRF, HA, alpha-galactosidase A, ACE-011, ALTU-140, CGX-1160, angiotensin therapeutic vaccine, D-4F, ETC-642, APP-018, rhMBL, SCV-07 (oral, tuberculosis), DRF-7295, ABT-828, ErbB2-specific immunotoxin (anticancer), DT3SSIL-3, TST-10088, PRO-1762, Combotox, cholecystokinin-B/gastrin-receptor binding peptides, 111In-hEGF, AE-37, trasnizumab-DM1, Antagonist G, IL-12 (recombinant), PM-02734, IMP-321, rhIGF-BP3, BLX-883, CUV-1647 (topical), L-19 based radioimmunotherapeutics (cancer), Re-188-P-2045, AMG-386, DC/1540/KLH vaccine (cancer), VX-001, AVE-9633, AC-9301, NY-ESO-1 vaccine (peptides), NA17.A2 peptides, melanoma vaccine (pulsed antigen therapeutic), prostate cancer vaccine, CBP-501, recombinant human lactoferrin (dry eye), FX-06, AP-214, WAP-8294A (injectable), ACP-HIP, SUN-11031, peptide YY [3-36] (obesity, intranasal), FGLL, atacicept, BR3-Fc, BN-003, BA-058, human parathyroid hormone 1-34 (nasal, osteoporosis), F-18-CCR1, AT-1100 (celiac disease/diabetes), JPD-003, PTH(7-34) liposomal cream (Novasome), duramycin (ophthalmic, dry eye), CAB-2, CTCE-0214, GlycoPEGylated erythropoietin, EPO-Fc, CNTO-528, AMG-114, JR-013, Factor XIII, aminocandin, PN-951, 716155, SUN-E7001, TH-0318, BAY-73-7977, teverelix (immediate release), EP-51216, hGH (controlled release, Biosphere), OGP-I, sifuvirtide, TV4710, ALG-889, Org-41259, rhCC10, F-991, thymopentin (pulmonary diseases), r(m)CRP, hepatoselective insulin, subalin, L19-IL-2 fusion protein, elafin, NMK-150, ALTU-139, EN-122004, rhTPO, thrombopoietin receptor agonist (thrombocytopenic disorders), AL-108, AL-208, nerve growth factor antagonists (pain), SLV-317, CGX-1007, INNO-105, oral teriparatide (eligen), GEM-OS1, AC-162352, PRX-302, LFn-p24 fusion vaccine (Therapore), EP-1043, S pneumoniae pediatric vaccine, malaria vaccine, Neisseria meningitidis Group B vaccine, neonatal group B streptococcal vaccine, anthrax vaccine, HCV vaccine (gpE1+gpE2+MF-59), otitis media therapy, HCV vaccine (core antigen+ISCOMATRIX), hPTH(1-34) (transdermal, ViaDerm), 768974, SYN-101, PGN-0052, aviscumnine, BIM-23190, tuberculosis vaccine, multi-epitope tyrosinase peptide, cancer vaccine, enkastim, APC-8024, GI-5005, ACC-001, TTS-CD3, vascular-targeted TNF (solid tumors), desmopressin (buccal controlled-release), onercept, and TP-9201.

In some embodiments, the polypeptide is adalimumab (HUMIRA), infliximab (REMICADE™), rituximab (RITUXAN™/MAB THERA™) etanercept (ENBREL™), bevacizumab (AVASTIN™), trastuzumab (HERCEPTIN™), pegrilgrastim (NEULASTA™), or any other suitable polypeptide including biosimilars and biobetters.

Other suitable polypeptides are those listed below and in Table 1 of US2016/0097074 :

**TABLE I**

| Protein Product | Reference Listed Drug |
|---|---|
| interferon gamma-1b | Actimmune ® |
| alteplase; tissue plasminogen activator | Activase ®/Cathflo ® |
| Recombinant antihemophilic factor | Advate |
| human albumin | Albutein ® |
| Laronidase | Aldurazyme ® |
| Interferon alfa-N3, human leukocyte derived | Alferon N ® |
| human antihemophilic factor | Alphanate ® |
| virus-filtered human coagulation factor IX | AlphaNine ® SD |
| Alefacept; recombinant, dimeric fusion protein LFA3-Ig | Amevive ® |
| Bivalirudin | Angiomax ® |
| darbepoetin alfa | Aranesp ™ |
| Bevacizumab | Avastin ™ |
| interferon beta-1a; recombinant | Avonex ® |
| coagulation factor IX | BeneFix ® |
| Interferon beta-1b | Betaseron ® |
| Tositumomab | BEXXAR ® |
| antihemophilic factor | Bioclate ™ |
| human growth hormone | BioTropin ™ |
| botulinum toxin type A | BOTOX ® |
| Alemtuzumab | Campath ® |
| acritumomab; technetium-99 labeled | CEA-Scan ® |
| alglucerase; modified form of beta-glucocerebrosidase | Ceredase ® |
| imiglucerase; recombinant form of beta-glucocerebrosidase | Cerezyme ® |
| crotalidae polyvalent immune Fab, ovine | CroFab ™ |
| digoxin immune fab [ovine] | DigiFab ™ |
| Rasburicase | Elitek ® |
| Etanercept | ENBREL ® |
| epoietin alfa | Epogen ® |
| Cetuximab | Erbitux ™ |
| algasidase beta | Fabrazyme ® |
| Urofollitropin | Fertinex ™ |
| follitropin beta | Follistim ™ |
| Teriparatide | FORTEO ® |
| human somatropin | GenoTropin ® |
| Glucagon | GlucaGen ® |
| follitropin alfa | Gonal-F ® |
| antihemophilic factor | Helixate ® |
| Antihemophilic Factor; Factor XIII | HEMOFIL |
| adefovir dipivoxil | Hepsera ™ |
| Trastuzumab | Herceptin ® |
| Insulin | Humalog ® |
| antihemophilic factor/von Willebrand factor complex-human | Humate-P ® |
| Somatotropin | Humatrope ® |
| Adalimumab | HUMIRA ™ |
| human insulin | Humulin ® |
| recombinant human hyaluronidase | Hylenex ™ |
| interferon alfacon-1 | Infergen ® |
| eptifibatide | Integrilin ™ |
| alpha-interferon | Intron A ® |
| Palifermin | Kepivance |
| Anakinra | Kineret ™ |
| antihemophilic factor | Kogenate ® FS |
| insulin glargine | Lantus ® |
| granulocyte macrophage colony-stimulating factor | Leukine ®/Leukine ® Liquid |
| lutropin alfa for injection | Luveris |
| OspA lipoprotein | LYMErix ™ |
| Ranibizumab | LUCENTIS ® |
| gemtuzumab ozogamicin | Mylotarg ™ |
| Galsulfase | Naglazyme ™ |
| Nesiritide | Natrecor ® |
| Pegfilgrastim | Neulasta ™ |
| Oprelvekin | Neumega ® |
| Filgrastim | Neupogen ® |
| Fanolesomab | NeutroSpec ™ (formerly LeuTech ®) |
| somatropin [rDNA] | Norditropin ®/Norditropin Nordiflex ® |
| Mitoxantrone | Novantrone ® |
| insulin; zinc suspension; | Novolin L ® |
| insulin; isophane suspension | Novolin N ® |
| insulin, regular; | Novolin R ® |
| Insulin | Novolin ® |
| coagulation factor Vila | NovoSeven ® |
| Somatropin | Nutropin ® |
| immunoglobulin intravenous | Octagam ® |
| PEG-L-asparaginase | Oncaspar ® |
| abatacept, fully human soluable fusion protein | Orencia ™ |
| muromomab-CD3 | Orthoclone OKT3 ® |
| high-molecular weight hyaluronan | Orthovisc ® |
| human chorionic gonadotropin | Ovidrel ® |
| live attenuated Bacillus Calmette-Guerin | Pacis ® |
| peginterferon alfa-2a | Pegasys ® |
| pegylated version of interferon alfa-2b | PEG-Intron ™ |
| Abarelix (injectable suspension); gonadotropin-releasing hormone | Plenaxis ™ |
| antagonist | |
| epoietin alfa | Procrit ® |
| Aldesleukin | Proleukin, IL-2 ® |
| Somatrem | Protropin ® |
| dornase alfa | Pulmozyme ® |
| Efalizumab; selective, reversible T-cell blocker | RAPTIVA ™ |
| combination of ribavirin and alpha interferon | Rebetron ™ |
| Interferon beta 1a | Rebif ® |
| antihemophilic factor | Recombinate ® rAHF/ |
| antihemophilic factor | ReFacto ® |
| Lepirudin | Refludan ® |
| Infliximab | REMICADE ® |
| Abciximab | ReoPro ™ |
| Reteplase | Retavase ™ |
| Rituxima | Rituxan ™ |
| interferon alfa-2^{a} | Roferon-A ® |
| Somatropin | Saizen ® |
| synthetic porcine secretin | SecreFlo ™ |
| Basiliximab | Simulect ® |
| Eculizumab | SOLIRIS (R) |
| Pegvisomant | SOMAVERT ® |
| Palivizumab; recombinantly produced, humanized mAb | Synagis ™ |
| thyrotropin alfa | Thyrogen ® |
| Tenecteplase | TNKase ™ |
| Natalizumab | TYSABRI ® |
| human immune globulin intravenous 5% and 10% solutions | Venoglobulin-S ® |
| interferon alfa-n1, lymphoblastoid | Wellferon ® |
| drotrecogin alfa | Xigris ™ |
| Omalizumab; recombinant DNA-derived humanized monoclonal | Xolair ® |
| antibody targeting immunoglobulin-E | |
| Daclizumab | Zenapax ® |
| ibritumomab tiuxetan | Zevalin ™ |
| Somatotropin | Zorbtive ™ (Serostim ®) |

In embodiments, the polypeptide is a hormone, blood clotting/coagulation factor, cytokine/growth factor, antibody molelcule, fusion protein, protein vaccine, or peptide as shown in Table 2.

**Table 2. Exemplary Products**

| **Therapeutic Product type** | **Product** | **Trade Name** |
|---|---|---|
| Hormone | Erythropoietin, Epoein-α | Epogen, Procrit |
| | Darbepoetin-α | Aranesp |
| | Growth hormone (GH), somatotropin | Genotropin , Humatrope, Norditropin, NovlVitropin, Nutropin, Omnitrope, Protropin, Siazen, Serostim, Valtropin |
| | Human follicle-stimulating hormone (FSH) | Gonal-F, Follistim |
| | Human chorionic | Ovidrel |
| | gonadotropin | Luveris |
| | Lutropin-α | GlcaGen |
| | Glucagon | Geref |
| | Growth hormone releasing | ChiRhoStim (human peptide), |
| | hormone (GHRH) | SecreFlo (porcine peptide) |
| | Secretin Thyroid stimulating hormone (TSH), thyrotropin | Thyrogen |
| Blood Clotting/Coagulation Factors | Factor VIIa | NovoSeven |
| | Factor VIII | Bioclate, Helixate, Kogenate, Recombinate, ReFacto |
| | Factor IX | |
| | Antithrombin III (AT-III) | Benefix |
| | Protein C concentrate | Thrombate III Ceprotin |
| Cytokine/Growth factor | Type I alpha-interferon | Infergen |
| | Interferon-αn3 (IFNαn3) | Alferon N |
| | Interferon-β1a (rIFN-β) | Avonex, Rebif |
| | Interferon-β1b (rIFN-β) | Betaseron |
| | Interferon-γ1b (IFNγ) | Actimmune |
| | Aldesleukin (interleukin 2(IL2), epidermal theymocyte activating | Proleukin |
| | factor; ETAF | Kepivance |
| | Palifermin (keratinocyte growth factor; KGF) | Regranex |
| | Becaplemin (platelet-derived growth factor; PDGF) | Anril, Kineret |
| | Anakinra (recombinant IL1 antagonist) | |
| Antibody molecules | Bevacizumab (VEGFA mAb) | Avastin |
| | | Erbitux |
| | Cetuximab (EGFR mAb) | Vectibix |
| | Panitumumab (EGFR mAb) | Campath |
| | | Rituxan |
| | Alemtuzumab (CD52 mAb) | Herceptin |
| | | Orencia |
| | Rituximab (CD20 chimeric Ab) | Humira |
| | | Enbrel |
| | Trastuzumab (HER2/Neu mAb) | Remicade |
| | Abatacept (CTLA Ab/Fc fusion) | Amevive |
| | | Raptiva |
| | Adalimumab (TNFamAb) | Tysabri |
| | Etanercept (TNF | Soliris |
| | receptor/Fc fusion) | Orthoclone, OKT3 |
| | Infliximab (TNFachimeric mAb) | |
| | Alefacept (CD2 fusion protein) | |
| | Efalizumab (CD11a mAb) | |
| | Natalizumab (integrin α4 subunit mAb) | |
| | Eculizumab (C5mAb) | |
| | Muromonab-CD3 | |
| Other: | Insulin | Humulin, Novolin |
| Fusion | Hepatitis B surface | Engerix, Recombivax HB |
| proteins/Protein | antigen (HBsAg) | |
| vaccines/Peptides | HPV vaccine | Gardasil |
| | OspA | LYMErix |
| | Anti-Rhesus(Rh) | Rhophylac |
| | immunoglobulin G | Fuzeon |
| | Enfuvirtide | |
| | Spider silk, e.g., fibrion | QMONOS |

In embodiments, the protein is multispecific protein, e.g., a bispecific antibody as shown in Table 3.

**Table 3: Bispecific Formats**

| **Name (other names, sponsoring organizations)** | **BsAb format** | **Targets** | **Proposed mechanisms of action** | **Development stages** | **Diseases (or healthy volunteers)** |
|---|---|---|---|---|---|
| Catumaxomab (Removab®, Fresenius Biotech, Trion Pharma, Neopharm) | BsIgG: Triomab | CD3, EpCAM | Retargeting of T cells to tumor, Fc mediated effector functions | Approved in EU | Malignant ascites in EpCAM positive tumors |
| Ertumaxomab (Neovii Biotech, Fresenius Biotech) | BsIgG: Triomab | CD3, HER2 | Retargeting of T cells to tumor | Phase I/II | Advanced solid tumors |
| Blinatumomab (Blincyto®, AMG 103, MT 103, MEDI 538, Amgen) | BiTE | CD3, CD19 | Retargeting of T cells to tumor | Approved in USA Phase II and III | Precursor B-cell ALL ALL DLBCL NHL |
| | | | | Phase II | |
| | | | | Phase I | |
| REGN1979 (Regeneron) | BsAb | CD3, CD20 | | | |
| Solitomab (AMG 110, MT110, Amgen) | BiTE | CD3, EpCAM | Retargeting of T cells to tumor | Phase I | Solid tumors |
| MEDI 565 (AMG 211, Medlmmune, Amgen) | BiTE | CD3, CEA | Retargeting of T cells to tumor | Phase I | Gastrointestinal adenocancinoma |
| RO6958688 (Roche) | BsAb | CD3, CEA | | | |
| BAY2010112 (AMG 212, Bayer; Amgen) | BiTE | CD3, PSMA | Retargeting of T cells to tumor | Phase I | Prostate cancer |
| MGD006 Macrogenics) | DART | CD3, CD123 | Retargeting of T cells to tumor | Phase I | AML |
| MGD007 (Macrogenics) | DART | CD3, gpA33 | Retargeting of T cells to tumor | Phase I | Colorectal cancer |
| MGD011 (Macrogenics) | DART | CD19, CD3 | | | |
| SCORPION (Emergent Biosolutions, Trubion) | BsAb | CD3, CD19 | Retargeting of T cells to tumor | | |
| AFM11 (Affimed Therapeutics) | TandAb | CD3, CD19 | Retargeting of T cells to tumor | Phase I | NHL and ALL |
| AFM12 (Affimed Therapeutics) | TandAb | CD19, CD16 | Retargeting of NK cells to tumor cells | | |
| AFM13 (Affimed Therapeutics) | TandAb | CD30, CD16A | Retargeting of NK cells to tumor cells | Phase II | Hodgkin's Lymphoma |
| GD2 (Barbara Ann Karmanos Cancer Institute) | T cells preloaded with BsAb | CD3, GD2 | Retargeting of T cells to tumor | Phase I/II | Neuroblastoma and osteosarcoma |
| pGD2 (Barbara Ann Karmanos Cancer Institute) | T cells preloaded with BsAb | CD3, Her2 | Retargeting of T cells to tumor | Phase II | Metastatic breast cancer |
| EGFRBi-armed autologous activated T cells (Roger Williams Medical Center) | T cells preloaded with BsAb | CD3, EGFR | Autologous activated T cells to EGFR-positive tumor | Phase I | Lung and other solid tumors |
| Anti-EGFR-armed activated T-cells (Barbara Ann Karmanos Cancer Institute) | T cells preloaded with BsAb | CD3, EGFR | Autologous activated T cells to EGFR-positive tumor | Phase I | Colon and pancreatic cancers |
| rM28 (University Hospital Tubingen) | Tandem scFv | CD28, MAPG | Retargeting of T cells to tumor | Phase II | Metastatic melanoma |
| IMCgp100 (Immunocore) | ImmTAC | CD3, peptide MHC | Retargeting of T cells to tumor | Phase I/II | Metastatic melanoma |
| DT2219ARL (NCI, University of Minnesota) | 2 scFv linked to diphtheria toxin | CD19, CD22 | Targeting of protein toxin to tumor | Phase I | B cell leukemia or lymphoma |
| XmAb5871 (Xencor) | BsAb | CD19, CD32b | | | |
| NI-1701 (Novlmmune) | BsAb | CD47, CD19 | | | |
| MM-111 (Merrimack) | BsAb | ErbB2, ErbB3 | | | |
| MM-141 (Merrimack) | BsAb | IGF-1 R, ErbB3 | | | |
| NA (Merus) | BsAb | HER2, HER3 | | | |
| NA (Merus) | BsAb | CD3, CLEC12A | | | |
| NA (Merus) | BsAb | EGFR, HER3 | | | |
| NA (Merus) | BsAb | PD1, undisclosed | | | |
| NA (Merus) | BsAb | CD3, undisclosed | | | |
| Duligotuzumab (MEHD7945A, Genentech, Roche) | DAF | EGFR, HER3 | Blockade of 2 receptors, ADCC | Phase I and II | Head and neck cancer Colorectal cancer |
| | | | | Phase II | |
| LY3164530 (Eli Lily) | Not disclosed | EGFR, MET | Blockade of 2 receptors | Phase I | Advanced or metastatic cancer |
| MM-111 (Merrimack Pharmaceuticals) | HSA body | HER2, HER3 | Blockade of 2 receptors | Phase II | Gastric and esophageal cancers Breast cancer |
| | | | | Phase I | |
| MM-141, (Merrimack Pharmaceuticals) | IgG-scFv | IGF-1R, HER3 | Blockade of 2 receptors | Phase I | Advanced solid tumors |
| RG7221 (RO5520985, Roche) | CrossMab | Ang2, VEGF A | Blockade of 2 proangiogenics | Phase I | Solid tumors |
| RG7716 (Roche) | CrossMab | Ang2, VEGF A | Blockade of 2 proangiogenics | Phase I | Wet AMD |
| OMP-305B83 (OncoMed) | BsAb | DLL4/VE GF | | | |
| TF2 (Immunomedics) | Dock and lock | CEA, HSG | Pretargeting tumor for PET or radioimaging | Phase II | Colorectal, breast and lung cancers |
| ABT-981 (AbbVie) | DVD-lg | IL-1α, IL-1β | Blockade of 2 proinflammatory cytokines | Phase II | Osteoarthritis |
| ABT-122 (AbbVie) | DVD-Ig | TNF, IL-17A | Blockade of 2 proinflammatory cytokines | Phase II | Rheumatoid arthritis |
| COVA322 | IgG-fynomer | TNF IL17A | Blockade of 2 proinflammatory cytokines | Phase I/II | Plaque psoriasis |
| SAR 156597 (Sanofi) | Tetravalen t bispecific tandem IgG | IL-13, IL-4 | Blockade of 2 proinflammatory cytokines | Phase I | Idiopathic pulmonary fibrosis |
| GSK2434735 (GSK) | Dual-targeting domain | IL-13, IL-4 | Blockade of 2 proinflammatory cytokines | Phase I | (Healthy volunteers) |
| Ozoralizumab (ATN103, Ablynx) | Nanobody | TNF, HSA | Blockade of proinflammatory cytokine, binds to HSA to increase half-life | Phase II | Rheumatoid arthritis |
| ALX-0761 (Merck Serono, Ablynx) | Nanobody | IL-17 A/F, HSA | Blockade of 2 proinflammatory cytokines, binds to HSA to increase half-life | Phase I | (Healthy volunteers) |
| ALX-0061 (AbbVie, Ablynx;) | Nanobody | IL-6R, HSA | Blockade of proinflammatory cytokine, binds to HSA to increase half-life | Phase I/II | Rheumatoid arthritis |
| ALX-0141 (Ablynx, Eddingpharm) | Nanobody | RANKL, HSA | Blockade of bone resorption, binds to HSA to increase half-life | Phase I | Postmenopausal bone loss |
| RG6013/ACE910 (Chugai, Roche) | ART-Ig | Factor IXa, factor X | Plasma coagulation | Phase II | Hemophilia |

## Claims

1. A filter assembly (10) comprising:
a housing (12) defining a hollow interior and an open end (14);
at least one filter cartridge (40) contained in the hollow interior of the housing, the filter cartridge including a first end and a second end, the second end including at least one gasket that encircles the filter cartridge;
a base (16) attached to the open end of the housing, the base defining a filter receiving recess (36) for receiving the second end of the filter cartridge, the recess including an engaging element (54) for securing the filter cartridge to the base, the recess having a depth and including:
(a) a first section (62) adjacent to a top end of the recess, the first section having a first diameter and the top end of the first section having a wall (64);
(b) a gasket guiding section (66) positioned below the first section; and
(c) a gasket contacting section (58) adjacent to the gasket guiding section, the gasket contacting section having a second diameter that is less than the first diameter, the second diameter having a size that engages the gasket on the filter cartridge to form a fluid tight seal;
a fluid inlet (28); and
a fluid outlet (30) in communication with the fluid inlet such that fluid flowing into the inlet passes through the at least one filter cartridge to the fluid outlet; **characterized in that** the wall (64) of the first section has a tapering height such that a top surface of the wall forms an angle of from 0.5° to 1.5° in relation to a horizontal line perpendicular to a central axis of the recess; and
the gasket guiding section (66) comprises a chamfered surface having an angle of from 30° to 60° in relation to a vertical line that is parallel to a central axis of the recess.

2. A filter assembly as defined in claim 1, wherein the chamfered surface has
a) an angle of from 35° to 55°, such as from 40° to 50°; and/or
b) a length of from 0.8 mm to 3.2 mm, such as from 1.1 mm to 2.6 mm, such as from 1.3 mm to 1.7 mm.

3. A filter assembly as defined in any of the preceding claims, wherein the wall (64) of the first section has a tapering height such that the difference between a greatest height in the wall (64) and a lowest height in the wall is from 0.5 mm to 2 mm, such as from 0.8 mm to 1.5 mm.

4. A filter assembly as defined in any of the preceding claims, wherein the filter assembly includes a plurality of filter cartridges and a plurality of corresponding filter receiving recesses.

5. A filter assembly as defined in any of the preceding claims, wherein the at least one gasket comprises an O-ring.

6. A filter assembly as defined in any of the preceding claims, wherein the filter cartridge includes a plurality of locking elements (52) that are secured in a respective plurality of engaging elements (54) on the base (16) within the filter receiving recess (36).

7. A filter assembly as defined in any of the preceding claims, wherein the chamfered surface of the gasket guiding section (66) is positioned adjacent to the first section (62), and wherein the gasket guiding section (66) has a diameter that is the same as the first diameter at a first end of the chamfered surface and has a diameter that is the same as the second diameter at the second end of the chamfered surface.

8. A filter assembly as defined in any of the preceding claims, wherein the filter cartridge (40) comprises a filter media (44) enclosed by a filter housing, the filter media comprising polyvinylidene fluoride.

9. A draining and locking base (16) for a filter assembly (10) as defined in any of the preceding claims comprising:
a base plate having a perimeter;
a securing mechanism for securing the base plate to an open end of a filter housing; and
a plurality of filter receiving recesses (36) formed into the base plate, each filter receiving recess (36) for receiving an end of a filter cartridge (40), each recess (36) including an engaging element (54) for securing the filter cartridge (40) to the base plate, the recess (36) having a depth and including:
(a) a first section (62) adjacent to a top end of the recess, the first section having a first diameter and the top end of the first section having a wall (64);
(b) a gasket guiding section (66) positioned below the first section; and
(c) a gasket contacting section (58) adjacent to the gasket guiding section (66), the gasket contacting section (58) having a second diameter that is less than the first diameter, the second diameter having a size that engages a gasket (50) on a filter cartridge (40) installed in the recess (36);
**characterized in that** the wall (64) of the first section has a tapering height such that a top surface of the wall forms an angle of from 0.5° to 1.5° in relation to a horizontal line perpendicular to a central axis of the recess; and
the gasket guiding section (66) comprises a chamfered surface having an angle of from 30° to 60° in relation to a vertical line that is parallel to a central axis of the recess.

10. A draining and locking base as defined in claim 9, wherein the base plate defines at least one fluid outlet (30) and wherein each of the filter receiving recesses (36) are in fluid communication with one of the outlets (30).

11. A draining and locking base as defined in claim 9 or 10, wherein the chamfered surface has
a) an angle of from 35° to 55°, such as from 40° to 50°; and/or
b) a length of from 0.8 mm to 3.2 mm, such as from 1.1 mm to 2.6 mm, such as from 1.3 mm to 1.7 mm.

12. A draining and locking base as defined in any of claims 9-11, wherein the wall (64) of the first section has a tapering height such that the difference between a greatest height in the wall (64) and a lowest height in the wall is from 0.5 mm to 2 mm, such as from 0.8 mm to 1.5 mm

13. A draining and locking base as defined in any of claims 9-12, wherein the chamfered surface of the gasket guiding section (66) is positioned adjacent to the first section (62), and wherein the gasket guiding section (66) has a diameter that is the same as the first diameter at a first end of the chamfered surface and has a diameter that is the same as the second diameter at the second end of the chamfered surface.

## Patentansprüche

1. Filteranordnung (10), umfassend:
ein Gehäuse (12), das einen hohlen Innenraum und ein offenes Ende (14) definiert;
mindestens eine Filterpatrone (40), die in dem hohlen Innenraum des Gehäuses enthalten ist, wobei die Filterpatrone ein erstes Ende und ein zweites Ende enthält, wobei das zweite Ende mindestens eine Dichtung enthält, die die Filterpatrone umgibt;
eine Basis (16), die an dem offenen Ende des Gehäuses angebracht ist, wobei die Basis eine Filteraufnahmeaussparung (36) zum Aufnehmen des zweiten Endes der Filterpatrone definiert, wobei die Aussparung ein Eingriffselement (54) zum Sichern der Filterpatrone an der Basis enthält, wobei die Aussparung eine Tiefe aufweist und Folgendes einschließt:
(a) einen ersten Abschnitt (62) neben einem oberen Ende der Aussparung, wobei der erste Abschnitt einen ersten Durchmesser und das obere Ende des ersten Abschnitts eine Wand (64) aufweist;
(b) einen Dichtungsführungsabschnitt (66), der unterhalb des ersten Abschnitts positioniert ist; und
(c) einen Dichtungskontaktabschnitt (58) neben dem Dichtungsführungsabschnitt, wobei der Dichtungskontaktabschnitt einen zweiten Durchmesser aufweist, der kleiner als der erste Durchmesser ist, wobei der zweite Durchmesser eine Größe aufweist, die in die Dichtung an der Filterpatrone eingreift, um eine flüssigkeitsdichte Abdichtung zu bilden;
einen Fluideinlass (28); und
einen Fluidauslass (30) in Verbindung mit dem Fluideinlass, derart, dass in den Einlass fließendes Fluid durch die mindestens eine Filterpatrone zum Fluidauslass gelangt;
**dadurch gekennzeichnet, dass** die Wand (64) des ersten Abschnitts eine sich verjüngende Höhe aufweist, derart, dass eine Oberseite der Wand einen Winkel von 0,5° bis 1,5° in Bezug auf eine horizontale Linie senkrecht zu einer Mittelachse der Aussparung bildet; und
der Dichtungsführungsabschnitt (66) eine abgeschrägte Oberfläche umfasst, die einen Winkel von 30° bis 60° in Bezug auf eine vertikale Linie aufweist, die parallel zu einer Mittelachse der Aussparung verläuft.

2. Filteranordnung nach Anspruch 1, wobei die abgeschrägte Oberfläche Folgendes aufweist:
a) einen Winkel von 35° bis 55°, wie z. B. von 40° bis 50°; und/oder
b) eine Länge von 0,8 mm bis 3,2 mm, wie z. B. von 1,1 mm bis 2,6 mm, wie z. B. von 1,3 mm bis 1,7 mm.

3. Filteranordnung nach einem der vorhergehenden Ansprüche, wobei die Wand (64) des ersten Abschnitts eine sich verjüngende Höhe aufweist, derart, dass der Unterschied zwischen einer größten Höhe in der Wand (64) und einer niedrigsten Höhe in der Wand von 0,5 mm bis 2 mm, wie z. B. von 0,8 mm bis 1,5 mm beträgt.

4. Filteranordnung nach einem der vorhergehenden Ansprüche, wobei die Filteranordnung mehrere Filterpatronen und mehrere entsprechende Filteraufnahmeaussparungen einschließt.

5. Filteranordnung nach einem der vorhergehenden Ansprüche, wobei die mindestens eine Dichtung einen O-Ring umfasst.

6. Filteranordnung nach einem der vorhergehenden Ansprüche, wobei die Filterpatrone mehrere Verriegelungselemente (52) enthält, die in jeweils mehreren Eingriffselementen (54) an der Basis (16) innerhalb der Filteraufnahmeaussparung (36) gesichert sind.

7. Filteranordnung nach einem der vorhergehenden Ansprüche, wobei die abgeschrägte Oberfläche des Dichtungsführungsabschnitts (66) neben dem ersten Abschnitt (62) positioniert ist und wobei der Dichtungsführungsabschnitt (66) einen Durchmesser aufweist, der gleich dem ersten Durchmesser an einem ersten Ende der abgeschrägten Oberfläche ist, und einen Durchmesser aufweist, der gleich dem zweiten Durchmesser am zweiten Ende der abgeschrägten Oberfläche ist.

8. Filteranordnung nach einem der vorhergehenden Ansprüche, wobei die Filterpatrone (40) ein Filtermedium (44) umfasst, das von einem Filtergehäuse umschlossen ist, wobei das Filtermedium Polyvinylidenfluorid umfasst.

9. Entleerungs- und Verriegelungsbasis (16) für eine Filteranordnung (10) nach einem der vorhergehenden Ansprüche, umfassend:
eine Grundplatte mit einem Umfang;
einen Sicherungsmechanismus zum Sichern der Grundplatte an einem offenen Ende eines Filtergehäuses; und
mehrere Filteraufnahmeaussparungen (36), die in der Grundplatte ausgebildet sind, wobei jede Filteraufnahmeaussparung (36) ein Ende einer Filterpatrone (40) aufnimmt, wobei jede Aussparung (36) ein Eingriffselement (54) zum Sichern der Filterpatrone (40) an der Grundplatte enthält, wobei die Aussparung (36) eine Tiefe aufweist und Folgendes einschließt:
(a) einen ersten Abschnitt (62) neben einem oberen Ende der Aussparung, wobei der erste Abschnitt einen ersten Durchmesser und das obere Ende des ersten Abschnitts eine Wand (64) aufweist;
(b) einen Dichtungsführungsabschnitt (66), der unterhalb des ersten Abschnitts positioniert ist; und
(c) einen Dichtungskontaktabschnitt (58) neben dem Dichtungsführungsabschnitt (66), wobei der Dichtungskontaktabschnitt (58) einen zweiten Durchmesser aufweist, der kleiner als der erste Durchmesser ist, wobei der zweite Durchmesser eine Größe aufweist, die in eine Dichtung (50) an der Filterpatrone (40) eingreift, die in die Aussparung (36) eingesetzt wird;
**dadurch gekennzeichnet, dass** die Wand (64) des ersten Abschnitts eine sich verjüngende Höhe aufweist, derart, dass eine Oberseite der Wand einen Winkel von 0,5° bis 1,5° in Bezug auf eine horizontale Linie senkrecht zu einer Mittelachse der Aussparung bildet; und
der Dichtungsführungsabschnitt (66) eine abgeschrägte Oberfläche umfasst, die einen Winkel von 30° bis 60° in Bezug auf eine vertikale Linie aufweist, die parallel zu einer Mittelachse der Aussparung verläuft.

10. Entleerungs- und Verriegelungsbasis nach Anspruch 9, wobei die Grundplatte mindestens einen Fluidauslass (30) definiert und wobei jede der Filteraufnahmeaussparungen (36) in Fluidverbindung mit einem der Auslässe (30) steht.

11. Entleerungs- und Verriegelungsbasis nach Anspruch 9 oder 10, wobei die abgeschrägte Oberfläche Folgendes aufweist:
a) einen Winkel von 35° bis 55°, wie z. B. von 40° bis 50°; und/oder
b) eine Länge von 0,8 mm bis 3,2 mm, wie z. B. von 1,1 mm bis 2,6 mm, wie z. B. von 1,3 mm bis 1,7 mm.

12. Entleerungs- und Verriegelungsbasis nach einem der Ansprüche 9 bis 11, wobei die Wand (64) des ersten Abschnitts eine sich verjüngende Höhe aufweist, derart, dass der Unterschied zwischen einer größten Höhe in der Wand (64) und einer niedrigsten Höhe in der Wand von 0,5 mm bis 2 mm, wie z. B. von 0,8 mm bis 1,5 mm beträgt.

13. Entleerungs- und Verriegelungsbasis nach einem der Ansprüche 9 bis 12, wobei die abgeschrägte Oberfläche des Dichtungsführungsabschnitts (66) neben dem ersten Abschnitt (62) positioniert ist und wobei der Dichtungsführungsabschnitt (66) einen Durchmesser aufweist, der gleich dem ersten Durchmesser an einem ersten Ende der abgeschrägten Oberfläche ist, und einen Durchmesser aufweist, der gleich dem zweiten Durchmesser am zweiten Ende der abgeschrägten Oberfläche ist.

## Revendications

1. Ensemble filtre (10) comprenant :
un boîtier (12) définissant un intérieur creux et une extrémité ouverte (14) ;
au moins une cartouche filtrante (40) contenue dans l'intérieur creux du boîtier, la cartouche filtrante comportant une première extrémité et une seconde extrémité, la seconde extrémité comportant au moins un joint d'étanchéité qui entoure la cartouche filtrante ;
une base (16) fixée à l'extrémité ouverte du boîtier, la base définissant un évidement de réception de filtre (36) destiné à recevoir la seconde extrémité de la cartouche filtrante, l'évidement comportant un élément de prise (54) pour fixer la cartouche filtrante à la base, l'évidement ayant une profondeur et comportant :
(a) une première section (62) adjacente à une extrémité supérieure de l'évidement, la première section ayant un premier diamètre et l'extrémité supérieure de la première section ayant une paroi (64) ;
(b) une section de guidage de joint d'étanchéité (66) positionnée en dessous de la première section ; et
(c) une section de contact de joint d'étanchéité (58) adjacente à la section de guidage de joint d'étanchéité, la section de contact de joint d'étanchéité ayant un second diamètre qui est inférieur au premier diamètre, le second diamètre ayant une taille permettant de mettre en prise le joint d'étanchéité sur la cartouche filtrante pour former un joint étanche aux fluides ;
une entrée de fluide (28) ; et
une sortie de fluide (30) en communication avec l'entrée de fluide de sorte que le fluide s'écoulant dans l'entrée traverse l'au moins une cartouche filtrante jusqu'à la sortie de fluide ; **caractérisé en ce que**
la paroi (64) de la première section a une hauteur effilée de telle sorte qu'une surface supérieure de la paroi forme un angle de 0,5° à 1,5° par rapport à une ligne horizontale perpendiculaire à un axe central de l'évidement ; et
la section de guidage de joint d'étanchéité (66) comprend une surface chanfreinée ayant un angle de 30° à 60° par rapport à une ligne verticale parallèle à un axe central de l'évidement.

2. Ensemble filtre selon la revendication 1, dans lequel la surface chanfreinée a
a) un angle de 35° à 55°, tel que de 40° à 50° ; et/ou
b) une longueur de 0,8 mm à 3,2 mm, telle que de 1,1 mm à 2,6 mm, telle que de 1,3 mm à 1,7 mm.

3. Ensemble filtre selon l'une quelconque des revendications précédentes, dans lequel la paroi (64) de la première section a une hauteur effilée de telle sorte que la différence entre une hauteur la plus grande dans la paroi (64) et une hauteur la plus basse dans la paroi est de 0,5 mm à 2 mm, telle que de 0,8 mm à 1,5 mm.

4. Ensemble filtre selon l'une quelconque des revendications précédentes, l'ensemble filtre comportant une pluralité de cartouches filtrantes et une pluralité d'évidements de réception de filtre correspondants.

5. Ensemble filtre selon l'une quelconque des revendications précédentes, dans lequel l'au moins un joint d'étanchéité comprend un joint torique.

6. Ensemble filtre selon l'une quelconque des revendications précédentes, dans lequel la cartouche filtrante comporte une pluralité d'éléments de verrouillage (52) qui sont fixés dans une pluralité respective d'éléments de prise (54) sur la base (16) à l'intérieur de l'évidement de réception de filtre (36).

7. Ensemble filtre selon l'une quelconque des revendications précédentes, dans lequel la surface chanfreinée de la section de guidage de joint d'étanchéité (66) est positionnée de manière adjacente à la première section (62), et dans lequel la section de guidage de joint d'étanchéité (66) a un diamètre qui est égal au premier diamètre à une première extrémité de la surface chanfreinée et a un diamètre qui est égal au second diamètre à la seconde extrémité de la surface chanfreinée.

8. Ensemble filtre selon l'une quelconque des revendications précédentes, dans lequel la cartouche filtrante (40) comprend un milieu filtrant (44) enfermé par un boîtier de filtre, le milieu filtrant comprenant du polyfluorure de vinylidène.

9. Base de drainage et de verrouillage (16) pour un ensemble filtre (10) selon l'une quelconque des revendications précédentes, comprenant :
une plaque de base ayant un périmètre ;
un mécanisme de fixation destiné à fixer la plaque de base à une extrémité ouverte d'un boîtier de filtre ; et
une pluralité d'évidements de réception de filtre (36) formés dans la plaque de base,
chaque évidement de réception de filtre (36) étant destiné à recevoir une extrémité d'une cartouche filtrante (40), chaque évidement (36) comportant un élément de prise (54) pour fixer la cartouche filtrante (40) à la plaque de base, l'évidement (36) ayant une profondeur et comportant :
(a) une première section (62) adjacente à une extrémité supérieure de l'évidement, la première section ayant un premier diamètre et l'extrémité supérieure de la première section ayant une paroi (64) ;
(b) une section de guidage de joint d'étanchéité (66) positionnée en dessous de la première section ; et
(c) une section de contact de joint d'étanchéité (58) adjacente à la section de guidage de joint d'étanchéité (66), la section de contact de joint d'étanchéité (58) ayant un second diamètre qui est inférieur au premier diamètre, le second diamètre ayant une taille permettant de mettre en prise un joint d'étanchéité (50) sur la cartouche filtrante (40) installée dans l'évidement (36) ;
**caractérisé en ce que** la paroi (64) de la première section a une hauteur effilée de telle sorte qu'une surface supérieure de la paroi forme un angle de 0,5° à 1,5° par rapport à une ligne horizontale perpendiculaire à un axe central de l'évidement ; et
la section de guidage de joint d'étanchéité (66) comprend une surface chanfreinée ayant un angle de 30° à 60° par rapport à une ligne verticale parallèle à un axe central de l'évidement.

10. Base de drainage et de verrouillage selon la revendication 9, dans laquelle la plaque de base définit au moins une sortie de fluide (30) et dans laquelle chacun des évidements de réception de filtre (36) est en communication fluidique avec l'une des sorties (30).

11. Base de drainage et de verrouillage selon la revendication 9 ou 10, dans laquelle la surface chanfreinée a
a) un angle de 35° à 55°, tel que de 40° à 50° ; et/ou
b) une longueur de 0,8 mm à 3,2 mm, telle que de 1,1 mm à 2,6 mm, telle que de 1,3 mm à 1,7 mm.

12. Base de drainage et de verrouillage selon l'une quelconque des revendications 9 à 11, dans laquelle la paroi (64) de la première section a une hauteur effilée de telle sorte que la différence entre une hauteur la plus grande dans la paroi (64) et une hauteur la plus basse dans la paroi est de 0,5 mm à 2 mm, telle que de 0,8 mm à 1,5 mm.

13. Base de drainage et de verrouillage selon l'une quelconque des revendications 9 à 12, dans laquelle la surface chanfreinée de la section de guidage de joint d'étanchéité (66) est positionnée de manière adjacente à la première section (62), et dans laquelle la section de guidage de joint d'étanchéité (66) a un diamètre qui est égal au premier diamètre à une première extrémité de la surface chanfreinée et a un diamètre qui est égal au second diamètre à la seconde extrémité de la surface chanfreinée.
